(19) Europäisches Patentamt
European Patent Office
Office européen des brevets

(11) **EP 4 645 745 A1**

(12) **EUROPEAN PATENT APPLICATION**
published in accordance with Art. 153(4) EPC

(43) Date of publication:
**05.11.2025 Bulletin 2025/45**

(21) Application number: **23912753.3**

(22) Date of filing: **20.12.2023**

(51) International Patent Classification (IPC):
**H04L 9/00** (2022.01)          **H04L 9/08** (2006.01)

(52) Cooperative Patent Classification (CPC):
**H04L 9/00; H04L 9/08**

(86) International application number:
**PCT/KR2023/021095**

(87) International publication number:
**WO 2024/144078 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.12.2022  KR 20220185035
18.07.2023  KR 20230093150**

(71) Applicant: **CRYPTO LAB INC.
Gwanak-gu, Seoul 08826 (KR)**

(72) Inventor: **BAE, Youngjin
Seoul 08826 (KR)**

(74) Representative: **Dragotti & Associati S.R.L.
Via Nino Bixio, 7
20129 Milano (IT)**

(54) **DEVICE AND METHOD FOR LINEAR TRANSFORMATION OF HOMOMORPHIC CRYPTOGRAM**

(57)    A computing device for linearly transforming multiple homomorphic cryptograms is disclosed. The computing device comprises a communication device for receiving an input of multiple homomorphic cryptograms, a memory for storing at least one instruction and the multiple homomorphic cryptograms, and a processor for executing the at least one instruction. The processor executes the at least one instruction to: pack the multiple homomorphic cryptograms by using multi-secret RLWE that share a linear part of the cryptograms; and perform key exchange of the packed multi-secret RLWE cryptograms by using a multi-secret switching key obtained in the format of multi secret RLWE.

# FIG. 4

EP 4 645 745 A1

**Description**

[Technical Field]

The present disclosure relates to a device and method for linear transformation of homomorphic cryptograms, and more particularly, to a device and method for linear transformation capable of processing a linear transformation of multiple homomorphic cryptograms in parallel.

[Background Art]

As communication technology develops and electronic devices spread, efforts are continuously made to maintain communication security between the electronic devices. Accordingly, encryption/decryption technology is used in most communication environments.

When messages encrypted by the encryption technology are delivered to the other party, the other party needs to perform decryption in order to use the messages. In this case, the other party wastes resources and time during decrypting the encrypted data. In addition, when the third party hacks messages while the other party temporarily decrypts the messages for the operation, there is a problem in that the messages may be easily leaked to the third party.

In order to solve this problem, a homomorphic encryption method is being studied. According to the homomorphic encryption, even if an operation is performed on cryptograms themselves without decrypting the encrypted information, it is possible to obtain the same result as the encrypted value after an operation on a plain text. Accordingly, various types of operations may be performed without decrypting the cryptogram.

However, as the operation on the homomorphic cryptogram progresses, the modulus in the homomorphic cryptogram decreases, so the computation becomes no longer possible. To prevent this, bootstrapping is applied.

However, the conventional homomorphic encryption method took a lot of time for a linear transformation and bootstrapping, making it difficult to process homomorphic encryption at high speed.

[Disclosure]

[Technical Problem]

The present disclosure is intended to solve the above-described problems, and an object of the present disclosure is to provide a device and method for linear transformation of homomorphic cryptograms capable of reducing a bootstrapping time of homomorphic encryption by parallel processing of linear key exchange of multiple homomorphic cryptograms.

In addition, another object of the present disclosure is to provide a device and method for linear transformation of homomorphic cryptograms capable of processing homomorphic encryption at high speed and thus improving performance of homomorphic encryption.

[Technical Solution]

According to an aspect of the present disclosure, a computing device for linearly transforming multiple homomorphic cryptograms includes a communication device that receives multiple homomorphic cryptograms, a memory that stores at least one instruction and the multiple homomorphic cryptograms, a processor configured to execute the at least one instruction. The processor is configured to, by executing the at least one instruction, pack the multiple homomorphic cryptograms using multi secret RLWE that share a linear part of the cryptograms, and perform key exchange of the packed multi secret RLWE cryptogram using a multi secret switching key obtained in the format of the multi secret RLWE.

A parameter of the multi secret RLWE may include at least one of a linear part (a), a secret key (s), a message (m), and an error (e) of the cryptogram. The linear part (a), the secret key (s), the message (m), and the error (e) may belong to elements of a homomorphic cryptogram set composed of a dimension (N), a modulus (q), and a rank (k) of an N-dimensional polynomial forming a ring.

When the multiple homomorphic cryptograms are k N-dimensional homomorphic cryptograms, the processor may be configured to pack the k N-dimensional homomorphic cryptograms and transform the packed k N-dimensional homomorphic cryptograms into one Nk-dimensional RLWE cryptogram, and perform key exchange of the Nk-dimensional RLWE cryptogram using the multi secret switching key.

The processor may be configured to modulus-convert the linear part of the multi secret RLWE cryptogram in a ModUp manner, multiply the ModUped linear part by the multi secret switching key, and modulus-convert a multiplication operation result in a ModDown manner to perform an addition operation on the remaining part excluding the linear part from the multi secret RLWE cryptogram.

According to another aspect of the present disclosure, a method for lineary transforming multiple homomorphic cryptograms includes receiving multiple homomorphic cryptograms, packing the multiple homomorphic cryptograms using a multi secret RLWE that shares a linear part of the cryptogram, and performing key exchange of the packed multi secret RLWE cryptogram using a multi secret switching key formed in a format of the multi secret RLWE.

A parameter of the multi secret RLWE may include at least one of a linear part (a), a secret key (s), a message (m), and an error (e) of the cryptogram, and the linear part (a), the secret key (s), the message (m), and the error (e) may belong to elements of a homomorphic cryptogram set composed of a dimension (N), a modulus (q), and a rank (k) of an N-dimensional polynomial forming a ring.

When the multiple homomorphic cryptograms are k N-dimensional homomorphic cryptograms, the packing using the multi secret RLWE may include packing the k N-dimensional homomorphic cryptograms and transforming the packed k N-dimensional homomorphic cryptogram into one Nk-dimensional RLWE cryptogram, and performing key exchange of the Nk-dimensional RLWE cryptogram using the multi secret switching key.

The performing of the key exchange of the multi secret RLWE cryptogram may include modulus-converting the linear part of the multi secret RLWE cryptogram in a ModUp manner, multiplying the ModUped linear part and the multi secret switching key, modulus-converting a multiplication operation result in a ModDown manner, and adding the remaining part excluding the linear part from the multi secret RLWE cryptogram to the ModDown conversion processing result.

There is provided a computer-readable medium including a program for executing a linear transformation method, in which the linear transformation method may include receiving multiple homomorphic cryptograms, packing the multiple homomorphic cryptograms using a multi secret RLWE that shares a linear part of the cryptogram, and performing key exchange of the packed multi secret RLWE cryptogram using a multi secret switching key formed in a format of the multi secret RLWE.

[Advantageous Effects]

As described above, according to various embodiments of the present disclosure, the linear key exchange of the multiple homomorphic cryptograms can be processed in parallel, thereby reducing the bootstrapping time of the homomorphic cryptograms. In addition, the linear transformation and bootstrapping time of the homomorphic cryptograms can be reduced to enable high-speed processing of homomorphic cryptograms, thereby improving the performance of the homomorphic cryptograms.

[Description of Drawings]

FIG. 1 is a diagram for describing a structure of a network system according to at least one embodiment of the present disclosure.
FIG. 2 is a block diagram illustrating a configuration of a computing device according to at least one embodiment of the present disclosure.
FIG. 3 is a block diagram illustrating the detailed configuration of the computing device according to one or more embodiments of the present disclosure.
FIG. 4 is a flowchart for describing a method for linearly transforming homomorphic cryptograms according to at least one embodiment of the present disclosure.
FIG. 5 is a flowchart illustrating in detail a step of packing using a multi secret RLWE illustrated in FIG. 4.
FIG. 6 is a flowchart illustrating in detail a step for performing key exchange of the multi secret RLWE cryptogram illustrated in FIG. 4.

[Mode for Invention]

Hereinafter, the present disclosure will be described in detail with reference to the accompanying drawings. Encryption/decryption may be applied to an information (data) transmission process performed in the present disclosure if necessary, and all expressions describing the information (data) transmission process in the present disclosure and claims should be interpreted as including cases of encryption/decryption even if not separately stated. In the present disclosure, expressions such as "transmission (delivery) from A to B" or "A receiving from B" include transmission (delivery) or reception with another medium included therebetween, and does not necessarily express only what is directly transmitted (delivered) or received from A to B.

In the description of the present disclosure, the order of each step should be understood as non-limiting unless the preceding step needs to be logically and temporally performed necessarily before the following step. In other words, except for the above exceptional cases, even if the process described as the following step is performed before the process described as the preceding step, the nature of the disclosure is not affected, and the scope should also be defined regardless of the order of the steps. In this specification, "A or B" is defined to mean not only selectively indicating either one of A and B, but also including both A and B. In addition, in the present disclosure, the term "include" has a meaning encompassing further including other components in addition to elements listed as included.

In this disclosure, only essential components necessary for the description of the present disclosure are described, and components unrelated to the essence of the present disclosure are not mentioned. In addition, it should not be interpreted as an exclusive meaning that includes only the mentioned components, but should be interpreted as a non-exclusive meaning that may include other components.

In addition, in the present disclosure, "value" is defined as a concept including a vector and a polynomial form as well as a scalar value. In the present disclosure, homomorphic cryptogram (RLWE) and RLWE cryptogram represent homomorphic cryptograms generated by RLWE technique, and multi secret RLWE cryptogram represents homomorphic cryptogram generated by multi secret RLWE technique.

Mathematical operations and operations of each step of the present disclosure to be described below may be implemented as computer operations by the known coding method and/or coding designed to suit the present disclosure in order to perform the corresponding operations or calculations.

Specific equations to be described below are illustratively described among possible alternatives, and the scope of the present disclosure should not be construed as being limited to equations mentioned in the present disclosure.

For convenience of description, in the present disclosure, a notation is defined as follows.

$s_1$, $s_2 \in$ R: Each of $s_1$ and $s_2$ is an element belonging to set R.
mod(q): Modular operation with element q

Hereinafter, various embodiments of the present disclosure will be described in detail with reference to the accompanying drawings.

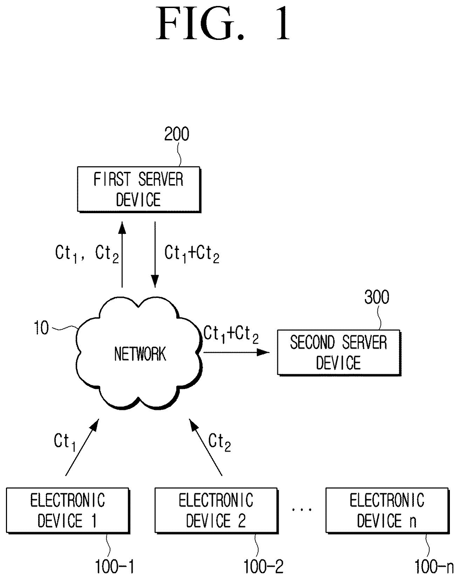

FIG. 1 is a diagram for describing a structure of a network system according to at least one embodiment of the present disclosure.

Referring to FIG. 1, a network system may include a plurality of electronic devices 100-1 to 100-n, a first server device 200, and a second server device 300, each of which may be connected to each other through a network 10.

The network 10 may be implemented in various types of wired and wireless communication networks, broadcasting communication networks, optical communication networks, cloud networks, etc., and each device may also be connected through methods such as Wi-Fi, Bluetooth, Near Field Communication (NFC), etc., without a separate medium.

Although FIG. 1 illustrates a plurality of electronic devices 100-1 to 100-n, a plurality of electronic devices are not necessarily used, and one device may be used. For example, the electronic devices 100-1 to 100-n may be implemented as various types of devices such as smart phones, tablets, game players, PCs, laptop PCs, home servers, and kiosks. In addition, the electronic devices 100-1 to 100-n may be implemented in the form of home appliances to which an IoT function is applied.

Users may input various types of information through the electronic devices 100-1 to 100-n they use. The input information may be stored in the electronic devices 100-1 to 100-n themselves, but may also be transmitted to and stored in an external device for storage capacity and security reasons. In FIG. 1, the first server device 200 may serve to store such information, and the second server device 300 may serve to use some or all of the information stored in the first server device 200.

Each of the electronic devices 100-1 to 100-n may homomorphically encrypt the input information and transmit the homomorphic cryptograms to the first server device 200.

Each of the electronic device 100-1 to 100-n may include encryption noise, i.e., an error, calculated during performing homomorphic encryption in a cryptogram. For example, the homomorphic cryptograms generated by each of the electronic devices 100-1 to 100-n may be generated in a form in which a result value including a message and an error value is restored when decrypted later using a secret key.

For example, when the homomorphic cryptograms generated by the electronic devices 100-1 to 100-n are decrypted using a secret key, the homomorphic cryptograms may be generated in a form that satisfies the following natures.

[Equation 1]

$$Dec(ct, sk) = <ct, sk> = M+e(mod\ q)$$

Here, $<,>$ denotes a usual inner product, ct denotes a cryptogram, sk denotes a secret key, M denotes a plain text message, e denotes an encryption error value, and mod q denotes a modulus of a cryptogram. q should be selected to be greater than a result value M obtained by multiplying a scaling factor $\Delta$ by a message. When an absolute value of the error value e is sufficiently small compared to M, a decryption value M+e of the cryptogram is a value that may replace the original message with the same precision in significant figure operation. Among the decrypted data, an error may be arranged on the least significant bit (LSB) side, and M may be arranged on the next least significant bit side.

When a size of the message is too small or too large, the size may be adjusted using a scaling factor. When the scaling factor is used, not only an integer type message but also a real number type message may be encrypted, and thus, the usability of the message may be greatly increased. In addition, by adjusting the size of the message using the scaling factor, a size of an area where messages exist in the cryptogram after the operation is made, that is, a size of an effective area may also be adjusted.

According to the embodiment, a modulus q of the cryptogram may be set and used in various forms. For example, the modulus of the cryptogram may be set in the form of an exponential power $q=\Delta^L$ of the scaling factor $\Delta$. When $\Delta$ is 2, $\Delta$ may be set to a value such as $q=2^{10}$.

As another example, a cryptogram modulus may be set to a value multiplied by a plurality of different scaling factors. Each factor may be set to a value within a similar range, that is, a value of similar size. For example, it may be set to $q=q1\,q2\,q3...\,qx$, and each of q1, q2, q3,..., qx has a similar size to the scaling factor $\Delta$ and may be set to a value of a coprime.

When the scaling factor is set in this way, the entire operation may be performed by being separated into a plurality of modulus operations according to Chinese remainder theorem (CRT), thereby reducing the operation burden.

The first server device 200 may store the received homomorphic cryptogram in a cryptogram state without decrypting the received homomorphic cryptogram.

The second server device 300 may request a specific processing result for the homomorphic cryptogram from the first server device 200. The first server device 200 may perform specific operation according to the request of the second server device 300 and then transmit the result to the second server device 300. Here, the specific operation may be general operations such as addition and homomorphic product of the multiple homomorphic cryptograms, as well as statistical operations, for example, operations such as mean, frequency distribution, linear regression, and covariance.

In this case, the second server device 300 may perform a combining operation for the multiple homomorphic cryptograms.

For example, when cryptograms ct1 and ct2 transmitted by the two electronic devices 100-1 and 100-2 are stored in the first server device 200, the second server device 300 may request, from the first server device 200, a value obtained by summing information provided from the two electronic devices 100-1 and 100-2. The first server device 200 may perform an operation for summing the two cryptograms according to the request, and then transmit the result value ct1 + ct2 to the second server device 300.

Due to the nature of the homomorphic cryptogram, the first server device 200 may perform the operation without the decryption, and the result value is also in the form of a cryptogram. In this case, the first server device 200 may perform bootstrapping on the operation result.

The first server device 200 may transmit the operation result cryptogram to the second server device 300. The second server device 300 may decrypt the received operated result cryptogram and acquire operated result values of data included in each homomorphic cryptogram. The first server device 200 may perform the operation several times according to a user request.

Meanwhile, FIG. 1 illustrates a case where the first electronic device and the second electronic device perform the encryption and the second server device performs the decryption, but is not limited thereto.

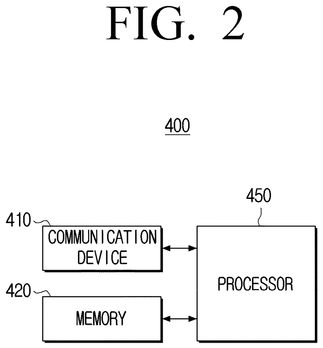

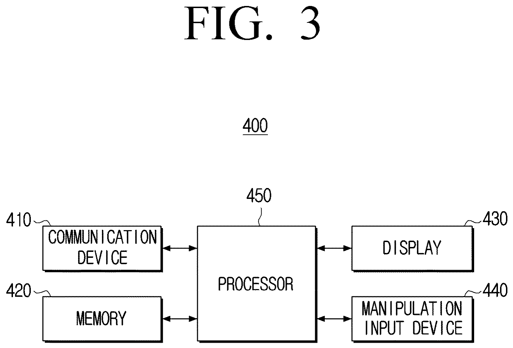

FIG. 2 is a block diagram illustrating a configuration of a computing device 400 according to at least one embodiment of the present disclosure, and FIG. 3 is a block diagram illustrating the detailed configuration of the computing device 400 according to at least one embodiment of the present disclosure.

Specifically, in the system of FIG. 1, a device that performs homomorphic encryption, such as the first electronic device and the second electronic device, a device that calculates the homomorphic cryptogram, such as the first server device, and a device that decrypts the homomorphic cryptogram, such as a second server device, may be referred to as a computing device. The computing device may be various devices such as a personal computer (PC), a laptop computer, a smart phone, a tablet, and a server.

Referring to FIGS. 2 and 3, the computing device 400 may include a communication device 410, a memory 420, a display 430, a manipulation input device 440, and a processor 450.

The communication device 410 is formed to connect the computing device 400 to an external device (not illustrated), and may be connected to the external device through a local area network (LAN) and the Internet network or be connected to the external device through a USB port or a wireless communication (for example, wireless fidelity (WiFi), 802.11a/b/g/n, near field communication (NFC), or Bluetooth) port. Such a communication device 410 may also be referred to as a transceiver.

The communication device 410 may receive a public key from the external device and transmit the public key generated by the computing device 400 itself to the external device.

Also, the communication device 410 may receive the message or the homomorphic cryptogram from the external device and transmit the generated homomorphic cryptogram or the operation result to the external device.

For example, the communication device 410 may receive the multiple homomorphic cryptograms (RLWE) from an external device. The homomorphic cryptogram (RLWE) may be expressed as a ring as illustrated in [Equation 2] below.

[Equation 2]

$$R_{q,N} := Z_q[X]/(X^N + 1)$$

Here, $R_{q,N}$ indicates a ring, $Z_q$ is a coefficient, N indicates a dimension of a polynomial constituting the ring, X indicates a variable of the polynomial, and q indicates a modulus.

The ring is a set of polynomials having predetermined coefficients, and means a set in which addition and multiplication are defined between elements and which is closed for addition and multiplication. Such a ring may be referred to as an annulus.

Also, the communication device 410 may receive various parameters required for generating a cryptogram from an external device. Meanwhile, upon implementation, various parameters may be directly received from a user through the manipulation input device 440 to be described later.

In addition, the communication device 410 may receive a request for the operation of the homomorphic cryptogram from an external device and transmit the calculated result to the external device. Here, the requested operation may be an operation such as addition, subtraction, or multiplication (e.g., modular multiplication operation), and may be a comparison operation, which is a statistical operation or a non-polynomial operation, or may be sorting processing. Here, the modular multiplication operation means a modular operation with q elements.

At least one instruction regarding the computing device 400 may be stored in the memory 420. For example, the memory 420 may store various programs (or software) for operating the computing device 400 according to various embodiments of the present disclosure.

The memory 420 may be implemented in various forms such as RAM, ROM, buffer, cache, flash memory, HDD, external memory, and memory card, but is not limited to anyone.

The memory 420 may store messages to be encrypted. Here, the message may be various types of credit information, personal information, and the like cited by a user, and may also be information related to location information used in the computing device 400 and a use history such as Internet usage time information.

In addition, the memory 420 may store a public key, and when the computing device 400 is a device that directly generates the public key, the memory 420 may store not only a secret key, but also various parameters necessary for generating the public key and the secret key.

Also, the memory 420 may store the homomorphic cryptogram generated in the process described below. Also, the memory 420 may store the homomorphic cryptogram transmitted from the external device. Also, the memory 420 may store the operated result cryptogram that is the result of the operation process described later.

The display 430 displays a user interface window for selecting a function supported by the computing device 400. For example, the display 430 may display a user interface window for selecting various functions provided by the computing device 400. The display 430 may be a monitor such as a liquid crystal display (LCD) and organic light emitting diodes (OLED), and may be implemented as a touch screen capable of simultaneously performing the functions of the manipulation input device 440 to be described later.

The display 430 may display a message requesting input of parameters necessary for generating a secret key and a public key. Also, the display 430 may display a message in which an encryption target selects a message. Meanwhile, in implementation, the encryption target may be directly selected by a user or may be automatically selected. That is, personal information or the like that requires encryption may be automatically set even if a user does not directly select a message.

The manipulation input device 440 may select a function of the computing device 400 and receive a control command for the function from the user. For example, the manipulation input device 440 may receive parameters necessary for generating a secret key and a public key from the user. Also, the manipulation input device 440 may receive the message to be encrypted from the user.

The processor 450 may control the overall operation of the computing device 400. For example, the processor 450 may generally control the operation of the computing device 400 by executing at least one instruction stored in the memory 420. The processor 450 may be composed of a single device such as a central processing unit (CPU) and an application-specific integrated circuit (ASIC), or may be composed of a plurality of devices such as a CPU and a graphics processing unit (GPU).

When the message to be transmitted is input, the processor 450 may store the message in the memory 420. The processor 450 may use various setting values and programs stored in the memory 420 to homomorphically encrypt the message. In this case, the public key may be used.

The processor 450 may generate and use a public key required to perform encryption by itself, or may receive and use the public key from an external device. For example, the second server device 300 that performs the decryption may distribute a public key to other devices.

Hereinafter, an operation of linearly transforming a homomorphic cryptogram (RLWE) input from each electronic device will be described.

When the multiple homomorphic cryptograms (RLWE) are input through the communication device 410, the processor 450 may pack the multiple homomorphic cryptograms and transform the packed multiple homomorphic cryptograms into a multi secret RLWE cryptogram that shares the linear part of the cryptogram. When the packing is used in the homomorphic encryption, it becomes possible to encrypt a plurality of messages into one cryptogram. Similarly, the processor 450 may pack the multiple homomorphic cryptograms and transform the packed multiple homomorphic cryptograms into one multi secret RLWE cryptogram.

For example, a multi secret RLWE for k N-dimensional (dimension N) RLWE cryptograms $(a_j, b_j = - a_j s + m_j)$ may be expressed by [Equation 3] below.

[Equation 3]

$$(a, b_0, b_1, \ldots, b_{k-1}) \text{ where } a, b_j \in R_{q,N}$$
$$b_j = - a s_j + m_j + e_j$$

Here, N indicates a dimension, q indicates a modulus, and k indicates a size of a rank or slot.

$S_j \in R_{q,N}$ indicates a j-th secret key, $m_j \in R_{q,N}$ indicates a j-th message, $e_j \in R_{q,N}$ indicates a j-th error, and a indicates the linear part of the multiple homomorphic cryptograms (RLWE).

When k N-dimensional RLWE cryptograms with a modulus of q are input, the processor 450 packs the k N-dimensional RLWE cryptograms and transforms the packed k N-dimensional RLWE cryptograms into Nk-dimensional RLWE cryptograms. In other words, the k N-dimensional RLWE cryptograms are transformed into one Nk-dimensional RLWE cryptogram.

The transformation process may be expressed by Equation 4 below.

[Equation 4]

$$R_{q,N} = Z_q[x]/(x^N + 1) \rightarrow R_{q,Nk} = Z[X]/(X^{Nk} + 1)$$

Defining as $\tilde{X} = X^k$, and packing k N-dimensional (dimension N) RLWE cryptograms $(a_j, b_j = - a_j s + m_j)$, [Equation 5] below may be obtained.

[Equation 5]

$$(A, B) = \left( \sum_{j=0}^{k-1} \tilde{a}_j X^j, \sum_{j=0}^{k-1} \tilde{b}_j X^j \right) = (A, - A\tilde{s} + M)$$

$$M = \sum_{j=0}^{k-1} \tilde{m}_j X^j$$

Here. .

The processor 450 transforms the transformed Nk-dimensional (dimension Nk) RLWE cryptogram into an N-dimensional, k-rank multi secret RLWE cryptogram.

In [Equation 4], when an image of Rq,N → $R_{q,Nk}$ is defined as Q, Q is a subring of $R_{q,Nk}$, so $R_{q,Nk}$ may be defined as a Q-module of k rank.

$$A = \sum_{j=0}^{k-1} \tilde{a}_j X^j$$

may be set as in RLWE (A, B = -AS + M) of Nk dimension. Here, when the key exchange is performed using a multi secret switching key $SWK = (\tilde{a}^j, \tilde{a}^j \Sigma + P \cdot S \cdot X)$ in the format of the multi secret RLWE,

$$AS = \sum_{j=0}^{k-1} \tilde{a}_j S X^j$$

, so the multi secret RLWE may be obtained through the key exchange result.

That is, the processor 450 includes exchange keys corresponding to each of the multiple homomorphic cryptograms (RLWE) and performs the key exchange of the Nk-dimensional RLWE cryptograms using the multi secret switching key in the format of the multi secret RLWE. Through this key exchange, the processor 450 may obtain the multi secret RLWE cryptogram into which the multiple homomorphic cryptograms (RLWE) are transformed.

The processor 450 may continuously perform the parallel processing of the key exchange of the multi secret RLWE cryptogram using the multi secret switching key. The key exchange of the multi secret RLWE is described as follows, taking the case applied in the CKKS scheme as an example.

The processor 450 performs ModUp on the linear part of the multi secret RLWE cryptogram into which the multiple homomorphic cryptograms (RLWE) are transformed and multiplies the ModUped linear part by the multi secret switching key.

The multi secret switching key for the multiplication operation is formed in the format of the multi secret RLWE as described above.

The processor 450 performs ModDown on the multiplication result of the linear part and the multi secret switching key, and performs an addition operation on the remaining part of the cryptogram excluding the linear part from the multi secret RLWE cryptogram into which the multiple homomorphic cryptograms (RLWE) are converted and the ModDown result.

Here, the ModUp may represent a modular shift-up operation, and the ModDown may represent a modular shift-down operation. For example, the ModUp and ModDown may represent computing operations performed in HEAAN.

Since the multi secret RLWE shares the linear part among the multiple RLWE cryptograms, it may be confirmed that the number of times of the ModUp is reduced from k times to 1 time when the key exchange is performed after packing the k RLWE cryptograms into the multi secret RLWE of k rank.

It may be confirmed that the number of polynomials that need to perform number theoretic transform (NTT) in the ModDown is reduced from 2k to k+1.

In general, the ModUp and ModDown include the NTT process with the highest computational complexity in the key exchange process of the cryptograms, so parallelizing the ModUp and ModDown has the same effect as parallelizing the entire key exchange process.

In addition, since the result of the key exchange is also the multi secret RLWE by using the multi secret switching key (multi secret key) in the format of the multi secret RLWE, the parallelization process of the key exchange may be continuously applied.

Specifically, the process of performing rotation P on multi secret RLWE $(a, - as_0 + m_0, - as_1 + m_1)$ with rank 2 in a CKKS scheme and then performing key exchange is described as follows.

The processor 450 may perform $ModUp(a^0)$ on the linear part of the multi secret RLWE cryptogram, and perform the multiplication of the ModUPed linear part and the multi secret switching key in the format of the multi secret RLWE as in [Equation 6] below.

[Equation 6]

LPMK=
$$ModUp(a^{l'}) \cdot SWK = ModUp(a^{l'}) \cdot (\alpha, - as_0 + Ps''_{q'}, - as_1 + Ps''_1)$$

In addition, the processor 450 may obtain [Equation 7] below by calculating a multiplication operation result (LPMK) of [Equation 6] in the ModDown manner.

[Equation 7]

$$ModDown(LPMK) = (a', - a's_0 + a''s''_{q'}, - a's_1 + a''s''_1)$$

The processor 450 may obtain [Equation 8] below by performing an addition operation on the remaining part (LPWO) of the cryptogram excluding the linear part from the multi secret RLWE cryptogram that has performed the rotation P and the mode down calculation result ModDown(LPMK) of [Equation 7].

[Equation 8]

$$\text{LPWO} + \text{ModDown(LPMK)} =$$
$$(0, \quad -a^{i_0}s^{p}_{0} + m^{p}_{0'}, \quad -a^{i'}s^{i'}_{1} + m^{i'}_{1}) \quad +$$
$$(a', \quad -a's_{0} + a^{p}s^{p}_{0'}, \quad -a's_{1} + a^{p}s^{p}_{1})$$
$$= (a', \quad -a's_{0} + m^{p}_{0'}, \quad -a's_{1} + m^{p}_{1})$$

As illustrated in the calculation result of [Equation 8], since the result of the key exchange using the multi secret RLWE is illustrated as the multi secret RLWE, the parallel processing of the linear transformation may be continuously performed.

Therefore, the linear transformation device of the multiple homomorphic cryptograms according to various embodiments of the present disclosure reduces the linear transformation and bootstrapping time of the homomorphic encryption to process the homomorphic encryption at high speed, thereby improving the performance of the homomorphic encryption.

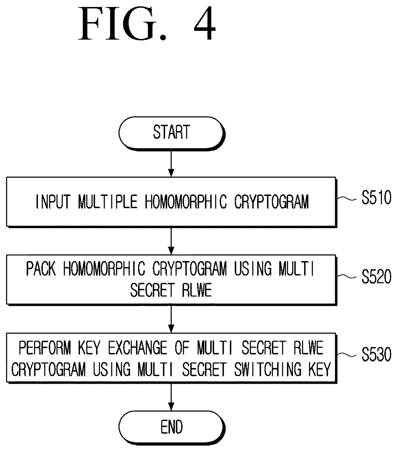

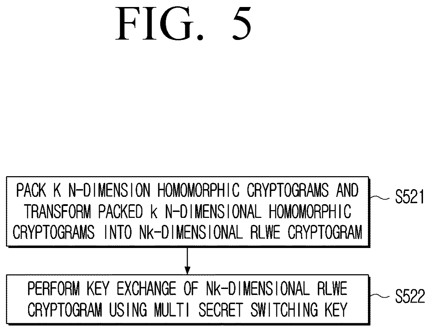

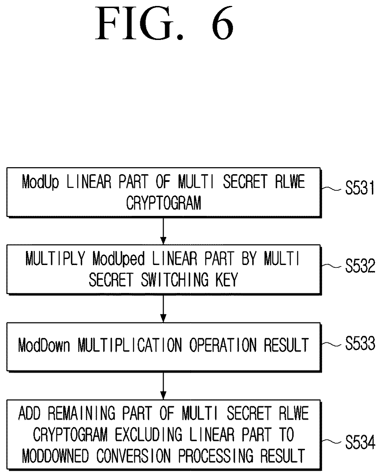

FIG. 4 is a flowchart for describing a method for linearly transforming homomorphic cryptograms according to at least one embodiment of the present disclosure, FIG. 5 is a flowchart illustrating in detail a step of performing linear transformation using the multi secret RLWE illustrated in FIG. 4, and FIG. 6 is a flowchart illustrating in detail a step of processing the key exchange in parallel illustrated in FIG. 4.

The linear transformation method described in FIGS. 4 to 6 can be performed by the computing device having the configuration of FIGS. 1 to 3, but is not necessarily limited thereto, and may also be performed by the electronic device having a different configuration from FIGS. 1 to 3. For example, any device equipped with a recording medium storing program code for performing this linear transformation method may perform the method regardless of its type.

Referring to FIG. 4, the method for linearly transforming multiple homomorphic cryptograms includes receiving the multiple homomorphic cryptograms (S510), packing the multiple homomorphic cryptograms using the multi secret RLWE that shares the linear part of the cryptogram (S520), and performing the key exchange of the packed multi secret RLWE cryptogram using the multi secret switching key formed in the format of the multi secret RLWE (S530).

In this case, as illustrated in FIG. 5, the packing using the multi secret RLWE (S520) may include packing the k N-dimensional homomorphic cryptograms and transforming the packed k N-dimensional homomorphic cryptograms into one Nk-dimensional RLWE cryptogram (S521), and performing the key exchange of the Nk-dimensional RLWE cryptogram using the multi secret switching key (S522).

The performing of the key exchange of the multi secret RLWE cryptogram (S530) may include, for example, when the multiple homomorphic cryptograms are the homomorphic cryptograms generated by the CKKS scheme, as illustrated in FIG. 6, modulus-converting the linear part of the multi secret RLWE cryptogram in the ModUp manner (S531), multiplying the ModUped linear part by the multi secret switching key in the format of the multi secret (S532), modulus-converting the multiplication operation result in the ModDown manner (S533), to add the remaining part of the cryptogram excluding the linear part from the multi secret RLWE cryptogram to the ModDown conversion processing result (S534).

In this way, the device and method for linear transformation of homomorphic cryptograms according to various embodiments of the present disclosure may process the linear key exchange for the multiple homomorphic cryptograms in parallel by utilizing the multi secret RLWE. In addition, the device and method for linear transformation of homomorphic cryptograms as described above may process CoeffToSlot and SlotToCoeff processes, which take up a large portion of time in the bootstrapping of the homomorphic cryptogram (FHE), in parallel to reduce the bootstrapping time, thereby improving the performance of the homomorphic encryption.

Here, the CoeffToSlot and SlotToCoeff represent the operations of the CKKS scheme that puts a coefficient of a plaintext into a slot for bootstrapping the homomorphic cryptogram and then perform a modulus operation, or performs an operation to extract only higher bits of cryptogram and then moves the plaintext from the slot to the coefficient again. The SlotToCoeff operation, which moves the slot into the coefficient, is actually a homomorphic operation of a Vandermonde matrix product made of primordial roots, i.e., a decoding process. Conversely, the CoeffToSlot operation that moves the coefficient to the slot may correspond to encoding. Meanwhile, the above-described linear transformation method according to various embodiments may be implemented in the form of program code for performing each step, and stored and distributed in a recording medium. In this case, the device equipped with the recording medium may perform the operations of the computing device described above.

Such a recording medium may be various types of computer readable media such as ROM, RAM, memory chip, memory card, external hard, hard, CD, DVD, magnetic disk, or magnetic tape.

Although embodiments of the disclosure have been illustrated and described hereinabove, the disclosure is not limited to the abovementioned specific embodiments, but may be variously modified by those skilled in the art to which the disclosure pertains without departing from the gist of the disclosure as disclosed in the accompanying claims. These modifications should also be understood to fall within the scope and spirit of the disclosure.

**Claims**

1. A computing device for linearly transforming multiple homomorphic cryptograms, comprising:

   a communication device that receives multiple homomorphic cryptograms;
   a memory that stores at least one instruction and the multiple homomorphic cryptograms;
   a processor configured to execute the at least one instruction,
   wherein the processor is configured to, by executing the at least one instruction, pack the multiple homomorphic cryptograms using multi secret RLWE that share a linear part of the cryptograms, and perform key exchange of the packed multi secret RLWE cryptogram using a multi secret switching key obtained in the format of the multi secret RLWE.

2. The computing device as claimed in claim 1, wherein a parameter of the multi secret RLWE includes at least one of a linear part (a), a secret key (s), a message (m), and an error (e) of the cryptogram, and
   the linear part (a), the secret key (s), the message (m), and the error (e) belong to elements of a homomorphic cryptogram set composed of a dimension (N), a modulus (q), and a rank (k) of an N-dimensional polynomial forming a ring.

3. The computing device as claimed in claim 1, wherein when the multiple homomorphic cryptograms are k N-dimensional homomorphic cryptograms, the processor is configured to pack the k N-dimensional homomorphic cryptograms and transform the packed k N-dimensional homomorphic cryptograms into one Nk-dimensional RLWE cryptogram, and perform key exchange of the Nk-dimensional RLWE cryptogram using the multi secret switching key.

4. The computing device as claimed in claim 1, wherein the processor is configured to modulus-convert the linear part of the multi secret RLWE cryptogram in a ModUp manner, multiply the ModUped linear part by the multi secret switching key, and modulus-convert a multiplication operation result in a ModDown manner to perform an addition operation on a remaining part excluding the linear part from the multi secret RLWE cryptogram.

5. A method for linearly transforming multiple homomorphic cryptograms in a computing device, comprising:

   receiving multiple homomorphic cryptograms;
   packing the multiple homomorphic cryptograms using a multi secret RLWE that shares a linear part of the cryptogram; and
   performing key exchange of the packed multi secret RLWE cryptogram using a multi secret switching key formed in a format of the multi secret RLWE.

6. The method as claimed in claim 5, wherein a parameter of the multi secret RLWE includes at least one of a linear part (a), a secret key (s), a message (m), and an error (e) of the cryptogram, and
   the linear part (a), the secret key (s), the message (m), and the error (e) belong to elements of a homomorphic cryptogram set composed of a dimension (N), a modulus (q), and a rank (k) of an N-dimensional polynomial forming a ring.

7. The method as claimed in claim 5, wherein when the multiple homomorphic cryptograms are k N-dimensional homomorphic cryptograms, the packing using the multi secret RLWE includes:

   packing the k N-dimensional homomorphic cryptograms and transforming the packed k N-dimensional homomorphic cryptograms into one Nk-dimensional RLWE cryptogram; and
   performing key exchange of the Nk-dimensional RLWE cryptogram using the multi secret switching key.

8. The method as claimed in claim 5, wherein the performing of the key exchange of the multi secret RLWE cryptogram includes:

modulus-converting the linear part of the multi secret RLWE cryptogram in a ModUp manner;
multiplying the ModUped linear part and the multi secret switching key;
modulus-converting a multiplication operation result in a ModDown manner; and
adding the remaining part excluding the linear part from the multi secret RLWE cryptogram to the ModDown conversion processing result.

9. A computer-readable medium including a program for executing a linear transformation method, wherein the linear transformation method includes:

receiving multiple homomorphic cryptograms;
packing the multiple homomorphic cryptograms using a multi secret RLWE that shares a linear part of the cryptogram; and
performing key exchange of the packed multi secret RLWE cryptogram using a multi secret switching key formed in a format of the multi secret RLWE.

# FIG. 1

# FIG. 2

400

# FIG. 3

400

450

410 COMMUNICATION DEVICE

420 MEMORY

PROCESSOR

430 DISPLAY

440 MANIPULATION INPUT DEVICE

# FIG. 4

```
          ┌─────────────┐
          │    START    │
          └──────┬──────┘
                 │
                 ▼
┌───────────────────────────────────────┐
│ INPUT MULTIPLE HOMOMORPHIC CRYPTOGRAM  │──── S510
└───────────────────┬───────────────────┘
                    │
                    ▼
┌───────────────────────────────────────┐
│ PACK HOMOMORPHIC CRYPTOGRAM USING MULTI│──── S520
│           SECRET RLWE                  │
└───────────────────┬───────────────────┘
                    │
                    ▼
┌───────────────────────────────────────┐
│ PERFORM KEY EXCHANGE OF MULTI SECRET RLWE│── S530
│ CRYPTOGRAM USING MULTI SECRET SWITCHING KEY│
└───────────────────┬───────────────────┘
                    │
                    ▼
          ┌─────────────┐
          │     END     │
          └─────────────┘
```

# FIG. 5

PACK K N-DIMENSION HOMOMORPHIC CRYPTOGRAMS AND TRANSFORM PACKED k N-DIMENSIONAL HOMOMORPHIC CRYPTOGRAMS INTO Nk-DIMENSIONAL RLWE CRYPTOGRAM ~ S521

PERFORM KEY EXCHANGE OF Nk-DIMENSIONAL RLWE CRYPTOGRAM USING MULTI SECRET SWITCHING KEY ~ S522

# FIG. 6

ModUp LINEAR PART OF MULTI SECRET RLWE CRYPTOGRAM ~ S531

MULTIPLY ModUped LINEAR PART BY MULTI SECRET SWITCHING KEY ~ S532

ModDown MULTIPLICATION OPERATION RESULT ~ S533

ADD REMAINING PART OF MULTI SECRET RLWE CRYPTOGRAM EXCLUDING LINEAR PART TO MODDOWNED CONVERSION PROCESSING RESULT ~ S534

## EP 4 645 745 A1

## INTERNATIONAL SEARCH REPORT

| | International application No. |
|---|---|
| | **PCT/KR2023/021095** |

### A. CLASSIFICATION OF SUBJECT MATTER

**H04L 9/00**(2006.01)i; **H04L 9/08**(2006.01)i

According to International Patent Classification (IPC) or to both national classification and IPC

### B. FIELDS SEARCHED

Minimum documentation searched (classification system followed by classification symbols)

H04L 9/00(2006.01); G06F 21/60(2013.01); H04L 9/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동형 암호문(homomorphic ciphertext), 선형변환(linear transformation), 멀티 시크릿(Multi Secret), RLWE, 멀티 시크릿 스위칭키(Multi Secret Switching Key), 키교환(Key exchange)

### C. DOCUMENTS CONSIDERED TO BE RELEVANT

| Category* | Citation of document, with indication, where appropriate, of the relevant passages | Relevant to claim No. |
|---|---|---|
| Y | US 2021-0058229 A1 (THE BOARD OF REGENTS OF THE UNIVERSITY OF TEXAS SYSTEM et al.) 25 February 2021 (2021-02-25)<br>See paragraphs [0063], [0097]-[0113] and [0141]; claims 7-8; and figures 7 and 10. | 1,3,5,7,9 |
| A | | 2,4,6,8 |
| Y | DAZA, Vanesa et al. Leveled Multikey FHE with constant-size ciphertexts from RLWE. Cryptology ePrint Archive. 12 April 2022. [Retrieved on 08 March 2024]. Retrieved from the Internet: <https://eprint.iacr.org/2022/447>.<br>See sections 1.1 and 3. | 1,3,5,7,9 |
| A | KR 10-2022-0120410 A (SAMSUNG ELECTRONICS CO., LTD. et al.) 30 August 2022 (2022-08-30)<br>See paragraphs [0114]-[0122]; and figure 4. | 1-9 |
| A | KR 10-2020-0139012 A (HONGIK UNIVERSITY INDUSTRY-ACADEMIA COOPERATION FOUNDATION) 11 December 2020 (2020-12-11)<br>See paragraphs [0113]-[0120]; and figure 8. | 1-9 |

| ✓ Further documents are listed in the continuation of Box C. | ✓ See patent family annex. |
|---|---|

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 March 2024** | **29 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/021095** |

### C. DOCUMENTS CONSIDERED TO BE RELEVANT

| Category* | Citation of document, with indication, where appropriate, of the relevant passages | Relevant to claim No. |
| --- | --- | --- |
| A | KR 10-2022-0121221 A (SEOUL NATIONAL UNIVERSITY R&DB FOUNDATION et al.) 31 August 2022 (2022-08-31)<br>See paragraphs [0214]-[0219]; and figure 7. | 1-9 |

Form PCT/ISA/210 (second sheet) (July 2022)

**INTERNATIONAL SEARCH REPORT**
Information on patent family members

International application No.

**PCT/KR2023/021095**

| Patent document cited in search report | | | Publication date (day/month/year) | Patent family member(s) | | | Publication date (day/month/year) |
|---|---|---|---|---|---|---|---|
| US | 2021-0058229 | A1 | 25 February 2021 | US | 11431470 | B2 | 30 August 2022 |
| KR | 10-2022-0120410 | A | 30 August 2022 | US | 11870889 | B2 | 09 January 2024 |
| | | | | US | 2022-0271922 | A1 | 25 August 2022 |
| KR | 10-2020-0139012 | A | 11 December 2020 | KR | 10-2308185 | B1 | 05 October 2021 |
| KR | 10-2022-0121221 | A | 31 August 2022 | | None | | |

Form PCT/ISA/210 (patent family annex) (July 2022)